# FASCICULE DE BREVET EUROPEEN

(11) **EP 3 172 032 B1**
(45) Date de publication et mention de la délivrance du brevet: **14.10.2020**
(21) Numéro de dépôt: 15744277.3
(22) Date de dépôt: 17.07.2015
(51) Int. Cl.: B29C 49/78, B29C 49/06, B29C 49/12, B29C 49/36

(54) **PROCEDE DE REGLAGE AUTOMATISE D'UNE INSTALLATION DE PRODUCTION DE RECIPIENTS**
VERFAHREN ZUR AUTOMATISCHEN EINSTELLUNG EINER ANLAGE ZUR HERSTELLUNG VON BEHÄLTERN
METHOD OF AUTOMATED ADJUSTMENT OF A FACILITY FOR PRODUCING CONTAINERS

(30) Priorité: 22.07.2014 FR 1457045
(43) Date de publication de la demande: 31.05.2017
(73) Titulaire: Sidel Participations, 76930 Octeville-sur-Mer (FR)
(72) Inventeur: GENDRE, Julien, F-76930 Octeville-sur-Mer (FR)
(74) Mandataire: Sidel Group
(86) Numéro de dépôt international: PCT/FR2015/051973
(87) Numéro de publication internationale: WO 2016/012704

(56) Documents cités:
- EP-A2- 2 236 268
- DE-A1- 10 000 859
- GB-A- 2 178 361
- US-A1- 2005 194 705
- US-A1- 2012 226 376

## Description

L'invention a trait au domaine de la fabrication des récipients (notamment bouteilles, flacons), par formage à partir de préformes en matière plastique telle que polyéthylène téréphtalate (PET).

La fabrication d'un récipient est réalisée dans une installation comprenant une unité de chauffe équipée de sources de rayonnement électromagnétique (généralement infrarouge) et une unité de formage, équipée quant à elle d'une série de moules à l'empreinte du modèle de récipient à former.

La fabrication comporte deux phases principales, à savoir une phase de chauffe des préformes, lors de laquelle celles-ci défilent dans l'unité de chauffe devant les sources de rayonnement, suivie d'une phase de soufflage lors de laquelle les préformes ainsi chauffées sont transférées chacune dans un moule de l'unité de formage et un fluide sous pression (généralement un gaz, ordinairement de l'air) est injecté dans chaque préforme au sein du moule pour lui conférer la forme finale du récipient. Le formage inclut généralement une opération d'étirage réalisée au moyen d'une tige mobile qui contribue à maintenir la préforme centrée par rapport au moule.

Une installation de production comprend généralement une console à partir de laquelle de nombreux paramètres peuvent être ajustés manuellement : dans l'unité de chauffe, par exemple : température de chauffe, vitesse de défilement des ébauches, puissance d'une ventilation assurant l'évacuation d'une partie de la chaleur ; dans l'unité de formage : pression d'injection, vitesse d'étirage, température de régulation thermique du moule, le cas échéant.

La connaissance des corrélations entre les différents paramètres de l'installation et la qualité des récipients produits s'est élargie ces dernières années, et les tentatives d'automatiser la production se sont concomitamment multipliées, avec pour objectif de prédéfinir complètement un processus convenant à la transformation sans défaut d'un récipient donné à partir d'une préforme donnée.

Ainsi, le brevet européen EP 2 236 268 (Krones) propose une installation comportant un dispositif de capteur détectant au moins une valeur caractéristique pour les préformes à transformer, et une unité de mémoire où une pluralité de processus différenciés pour la transformation des récipients est associée à une pluralité de types de préformes et de moules de soufflage, pour que la connaissance d'un moule défini et d'une préforme définie permette la sélection et l'utilisation d'un processus exactement défini (sic).

Si cette installation peut (en théorie) fonctionner de manière autonome (c'est-à-dire sans intervention d'un opérateur) une fois la production lancée, encore faut-il qu'elle dispose de « processus exactement définis ». Le brevet précité se borne cependant à évoquer ces processus, sans dévoiler la manière dont ils sont élaborés. On comprend donc que, si cette installation est automatisée en phase de production, elle ne l'est pas en phase de mise au point, lorsque les « processus exactement définis » doivent, précisément, être exactement définis, avec le concours ou sous le contrôle d'opérateurs hautement spécialisés ayant une maîtrise parfaite des corrélations évoquées ci-dessus.

Par ailleurs, le document GB2178361 décrit un ajustement d'une fente de buse d'injection de préformes en fonction de l'épaisseur du récipient soufflé à partir de cette préforme. Le document EP2236268 décrit une installation et un procédé de transformation de préforme en récipient. Le document DE10000859 décrit un procédé de formage d'un corps à paroi mince.

Un premier objectif de l'invention est de proposer une solution permettant d'automatiser de manière plus complète une installation de production de récipients à partir de préformes en matière plastique.

Un deuxième objectif de l'invention est de proposer une solution permettant d'automatiser la phase de mise au point, en amont de la production de série.

A cet effet, il est proposé, en premier lieu, un procédé de réglage d'une installation de production de récipients, chaque récipient étant produit à partir d'une préforme en matière plastique, ce procédé comprenant les étapes consistant à :
a) identifier un modèle de préforme ;
b) identifier un modèle de récipient à produire à partir du modèle de préforme ;
c) à partir de ces identifications, sélectionner dans une base de données une recette de production associée au modèle de préforme et au modèle de récipient et comprenant des consignes de commande de l'installation ;
d) commander le fonctionnement de l'installation suivant la recette de production, pour produire un corps creux à partir d'une préforme conforme au modèle ;
e) mesurer une ou plusieurs propriétés réelles du corps creux produit suivant la recette de production ;
f) comparer chaque propriété réelle avec une propriété théorique prédéterminée correspondante ;
g) tant qu'au moins une propriété réelle est décrétée non conforme :
   h) ajuster la recette ;
   i) répéter les étapes d) à f) suivant la recette ajustée ;
j) dès lors que chaque propriété réelle est décrétée conforme, mémoriser la recette de production ajustée dans la base de données.

Ce procédé permet l'automatisation du réglage de l'installation avant le lancement de la production de série, au bénéfice de la productivité et de l'uniformité qualitative de la production.

Diverses caractéristiques supplémentaires peuvent être prévues, seules ou en combinaison :
- il est prévu, avant la première étape de commande de fonctionnement de l'installation, une étape de définition d'une cadence de production ;
- l'identification d'un modèle de préforme comprend la sélection d'une ou plusieurs spécifications parmi :
   - désignation de la matière,
   - masse de la préforme,
   - dimensions de la préforme,
   - viscosité intrinsèque de la matière,
   - teneur en eau,
   - colorant,
   - additif(s),
   - absorbance de la matière,
   - indice de réfraction de la matière.
- l'identification d'un modèle de récipient comprend la sélection d'une ou plusieurs spécifications parmi :
   - format du récipient ;
   - rapport d'allongement axial ;
   - rapport d'allongement radial ;
   - application à laquelle est destiné le récipient ;
- l'installation comprend un four, le corps creux est une préforme chauffée au sein du four, la recette de fabrication comprend des consignes de commande du four et l'étape de commande de fonctionnement de l'installation comprend une commande de fonctionnement du four ;
- le four comprend des sources de rayonnement électromagnétique, et la recette de fabrication comprend une puissance moyenne à délivrer aux sources ;
- la recette de fabrication comprend un temps d'exposition des préformes aux sources ou une cadence de défilement des préformes devant les sources ;
- le four comprend un système de ventilation, et la recette de fabrication comprend une puissance à délivrer au système de ventilation ;
- l'installation est équipée d'un dispositif de thermographie, et l'étape e) de mesure comprend la mesure d'un profil thermique sur la préforme à la sortie du four ;
- l'installation comprend au moins une unité de formage équipée d'au moins un poste de formage muni d'un moule à l'empreinte du modèle de récipient à former, le corps creux est un récipient, la recette de fabrication comprend des consignes de commande de l'unité de formage et l'étape de commande de fonctionnement de l'installation comprend une commande de fonctionnement de l'unité de formage ;
- l'unité de formage comprend des électrovannes pour l'injection de fluide sous pression dans le moule, ou pour l'extraction du fluide de celui-ci, et la recette de fabrication comprend des consignes de formage parmi lesquelles l'instant d'ouverture des électrovannes, le débit de fluide transitant par celles-ci, et la pression de fluide ;
- le ou chaque poste de formage est équipé d'une tige d'étirage mobile par rapport au moule, et la recette de fabrication comprend la vitesse de déplacement de la tige ;
- l'unité de formage comprend un carrousel sur lequel sont montés plusieurs postes de formage, et la recette de fabrication comprend la vitesse de rotation du carrousel ;
- l'installation est équipée d'une caméra thermique, et l'étape e) de mesure comprend la mesure du profil thermique du récipient à la sortie du moule ;
- l'installation est équipée d'un interféromètre, et l'étape e) de mesure comprend la mesure de l'épaisseur de paroi du récipient à la sortie du moule ;
- l'installation est équipée d'un dispositif de mesure de la pression, et l'étape e) de mesure comprend la mesure de la pression régnant dans le récipient en cours de formage ;
- l'installation est équipée d'une caméra fonctionnant dans le domaine visible, et l'étape e) de mesure comprend la mesure de la position d'une pastille d'injection sur le fond du récipient à la sortie du moule.

Il est proposé, en deuxième lieu, un produit programme d'ordinateur implémenté sur un support mémoire, susceptible d'être mis en œuvre par une unité de traitement informatique et comprenant des instructions correspondant aux étapes d'un procédé tel que présenté ci-dessus.

D'autres objets et avantages de l'invention apparaîtront à la lumière de la description d'un mode de réalisation, faite ci-après en référence aux dessins annexés dans lesquels :
- la figure 1 est une vue schématique montrant une installation de production de récipients, comprenant une unité de chauffe et une unité de formage ;
- la figure 2 est une vue schématique illustrant plus en détail l'architecture de l'installation, y compris son système de commande automatisée ;
- la figure 3 est un schéma synoptique illustrant diverses étapes d'un procédé de réglage automatisé d'une installation de production de récipients.

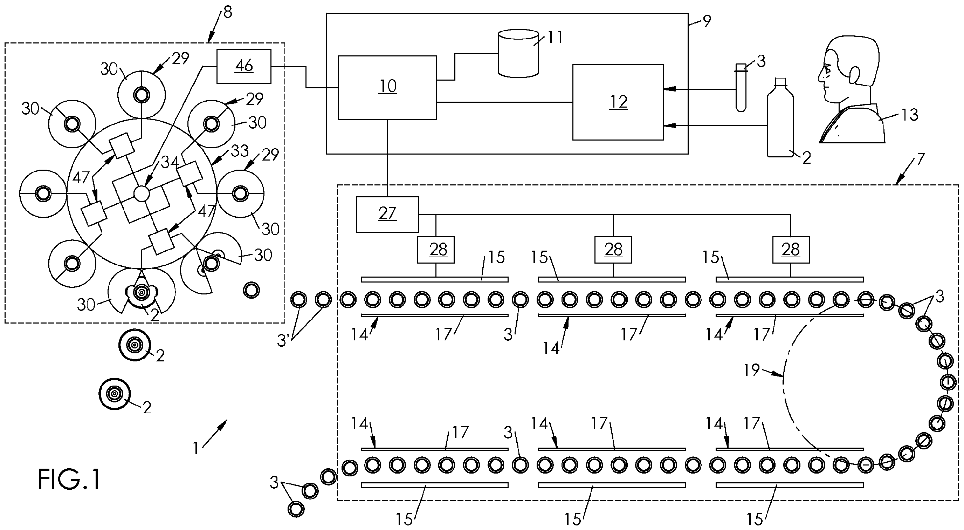

Sur la figure 1 est représentée une installation **1** de production de récipients **2** à partir de préformes **3** en matière plastique, typiquement en PET (polyéthylène téréphtalate).

Une préforme **3** comprend typiquement un corps **4** cylindrique, un col **5** qui s'étend à une extrémité supérieure du corps **4** et un fond **6** hémisphérique qui ferme le corps **4** à une extrémité inférieure opposée au col **5.**

Chaque modèle de préforme peut être défini au moyen de spécifications qui comprennent notamment :
- désignation de la matière (par ex. PET) ;
- masse de la préforme (en grammes, par ex. 8 g)
- dimensions de la préforme (comprenant typiquement longueur hors tout, diamètre du corps, épaisseur à mi-longueur du corps).
- viscosité intrinsèque de la matière (définie par la viscosité d'une solution du polymère employé à concentration tendant vers zéro - en dl/g) ;
- teneur en eau (en % de la masse) ;
- colorant (ex. bleu) ;
- additifs éventuels (ex. piégeur d'acétaldéhyde, retardateur de cristallisation, agent azurant, stabilisant thermique) ;
- absorbance (ou densité optique) de la matière ;
- indice de réfraction de la matière.

L'installation **1** comprend plusieurs unités **7, 8** de traitement, et une unité **9** centrale de contrôle de celles-ci, qui comprend notamment un calculateur **10** (ou processeur), une base **11** de données et une console **12** (ou interface graphique) pour l'interaction avec un opérateur **13.**

Plus précisément, l'installation **1** comprend, en premier lieu, une unité **7** de chauffe des préformes, également dénommé four. Ce four **7** comprend une série de modules **14** de chauffe ayant chacun une paroi **15** rayonnante munie de sources **16** superposées de rayonnement infrarouge (ou tout autre rayonnement électromagnétique susceptible de provoquer la chauffe des préformes **3**) et, le cas échéant, une paroi **17** réfléchissante placée en regard de la paroi **15** rayonnante pour réfléchir la portion de rayonnement non absorbé par les préformes **3.**

En fonctionnement normal (c'est-à-dire en production de série), les préformes **3** à température ambiante sont introduites dans le four **7** par une entrée de celui-ci, par exemple au moyen d'une roue ou d'un convoyeur d'alimentation. Puis les préformes **3** sont chauffées au défilé dans le four **7** à une température supérieure à la température de transition vitreuse de la matière (la température finale des ébauches est de l'ordre de 120°C pour le PET, dont la température de transition vitreuse est d'environ 80°C).

Certaines spécifications des préformes **3** peuvent être contrôlées en entrée du four **7** pour vérifier leur conformité. Ainsi, il est possible de contrôler certaines dimensions, par exemple l'épaisseur de la préforme **3** à mi-longueur du corps **4,** notamment au moyen d'un interféromètre. De même, il est possible de contrôler certaines propriétés optiques de la préforme **3** ou détecter certains défauts (par ex. l'inclusion de bulles d'air) au moyen d'une caméra.

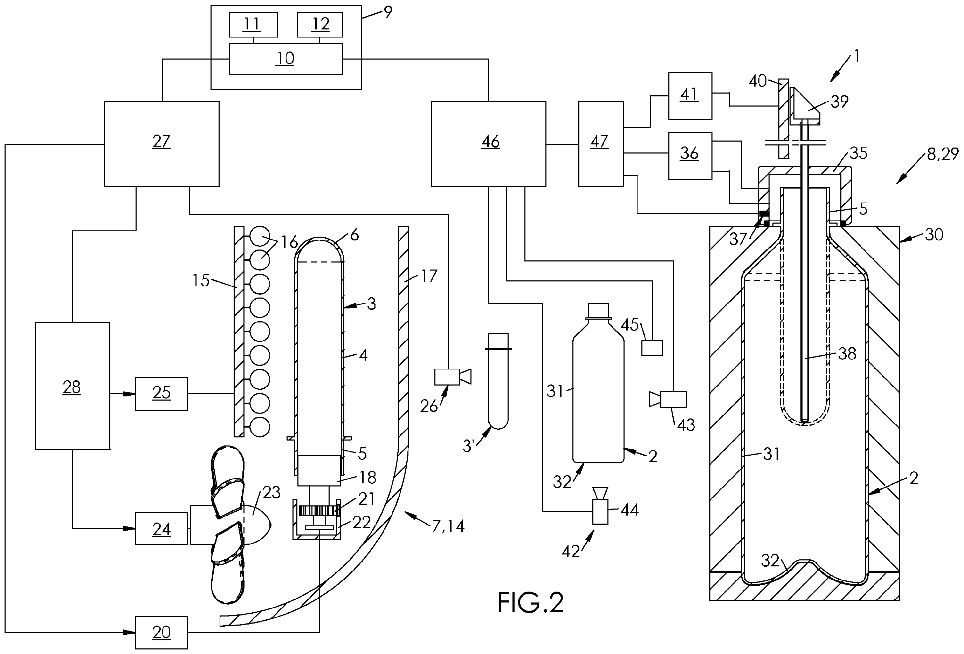

Dans le four **7,** les préformes **3** sont par exemple montées sur des supports **18** pivotants ou tournettes. Chaque tournette **18** est montée sur une chaîne circulant sur une roue **19** motrice entraînée en rotation par un moteur **20.** La tournette **18** est munie d'un pignon **21** qui engrène une crémaillère **22** pour entraîner la tournette **18** en rotation pendant son défilement dans le four **7** et ainsi exposer chaque préforme **3** au rayonnement. Dans l'exemple illustré sur la figure 2, les préformes **3** sont convoyées col en bas mais elles pourraient l'être col en haut.

Pour évacuer au moins une partie de la chaleur excédentaire produite par la paroi **15** rayonnante, le four **7** peut être équipé d'un système de ventilation comprenant par exemple un ventilateur **23** entraîné par un moteur **24** et positionné au droit des cols **5** des préformes **3.**

En outre, la puissance du rayonnement émis par les sources **16** peut être modulée au moyen d'un variateur **25** de puissance, comme dans l'exemple de réalisation illustré sur la figure 2.

Le profil thermique des préformes **3** est contrôlé en sortie du four **7** au moyen d'un dispositif **26** de thermographie. Selon un mode de réalisation illustré sur la figure 2, le dispositif **26** de thermographie comprend une caméra thermique pointant vers les préformes **3.**

Dans le four **7,** les préformes **3** subissent une transformation de nature essentiellement thermique, et on obtient à la sortie du four **7** des corps creux sous forme de préformes **3'** chaudes.

Le four **7** est piloté de manière automatique par une unité **27** de contrôle dédiée, asservie à l'unité **9** centrale.

L'unité **27** de contrôle du four **7** pilote une pluralité de contrôleurs **28** esclaves associés chacun à un ou plusieurs modules **14** de chauffe. Chaque contrôleur **28** est du type contrôleur logique programmable, tel que décrit dans W. Bolton, Programmable Logic Controllers, Newnes, cinquième édition, 2009.

Chaque contrôleur **28** pilote le variateur **25** de puissance et le moteur **24** du ventilateur du (de chaque) module **14** de chauffe auquel il est dédié, en fonction d'une consigne reçue de l'unité **27** de contrôle.

L'unité **27** de contrôle est reliée directement au dispositif **26** de thermographie pour recueillir les données thermographiques des préformes **3'** chaudes en sortie du four **7** et au moteur **20** de la roue **19** pour contrôler la cadence de défilement des préformes **3** au sein du four **7.**

L'installation **1** comprend, en deuxième lieu, une unité **8** de formage par soufflage ou étirage soufflage, équipée d'au moins un poste **29** (et en l'espèce une série de postes **29**) de formage, chacun muni d'un moule **30** à l'empreinte du modèle de récipient à former.

Un récipient **2** comprend un col **5,** qui est celui, inchangé, de la préforme **3,** un corps **31** globalement cylindrique et un fond **32** qui ferme le corps **31** à l'opposé du col **5.**

Chaque modèle de récipient peut être identifié au moyen de spécifications qui comprennent notamment :
- format ou volume (en litres, par ex. 0,5 l) ;
- rapport d'allongement axial (rapport entre, d'une part, la longueur développée du récipient **2** mesurée sur le corps **31** de celui-ci dans un plan axial de coupe et, d'autre part, la longueur développée d'une ligne médiane entre la surface externe et la surface interne de la préforme **3,** mesurée sur le corps **4** de celle-ci dans le même plan axial de coupe) ;
- rapport d'allongement radial (rapport entre le diamètre moyen du corps **31** du récipient **2** et le diamètre moyen du corps **4** de la préforme **2**) ;
- application à laquelle est destiné le récipient **2** (par ex. eau plate, boisson gazeuse, boisson remplie à chaud).

Le rapport d'allongement axial et le rapport d'allongement radial peuvent être conjointement remplacés par leur produit, dénommé taux de biorientation.

Comme on le voit sur la figure 1, l'unité **8** de formage comprend un carrousel **33** tournant sur lequel sont montés les postes **29** de formage. L'unité **8** de formage comprend en outre, avantageusement, un capteur **34** de la position angulaire instantanée du carrousel **33,** sous forme par exemple d'un codeur (c'est-à-dire, en pratique, un roulement instrumenté).

Chaque poste **29** de formage est équipé d'une tuyère **35** par laquelle un fluide (notamment un gaz tel que de l'air) est injecté dans le moule **30.** Chaque poste **29** de formage est également équipé d'un dispositif d'injection comprenant un bloc **36** d'actionneurs relié à la tuyère **35,** équipé d'électrovannes pour l'injection de fluide sous pression dans le moule (contenant la préforme **3**), ou pour l'extraction du fluide du moule **30.**

Selon un mode de réalisation, qui correspond au cas le plus courant, le bloc **36** d'actionneurs inclut :
- une électrovanne dite de présoufflage, pour la mise en communication commandée de la tuyère **35** avec une source de fluide à une pression de présoufflage, comprise entre 7 et 15 bars,
- une électrovanne dite de soufflage, pour la mise en communication commandée de la tuyère **35** avec une source de fluide à une pression de soufflage, supérieure à la pression de présoufflage, comprise par ex. entre 20 et 30 bars,
- une électrovanne dite de balayage, pour la mise en communication commandée de la tuyère **35** avec une source de fluide à une pression de balayage ;
- une électrovanne de récupération, pour la mise en communication commandée de la tuyère **35** avec un collecteur de fluide sous pression en provenance du récipient **2** formé en cours de dépressurisation permettant ensuite d'alimenter la source de fluide à la pression de présoufflage ;
- une électrovanne de mise à l'air, pour la mise en communication commandée de la tuyère **35** avec l'air libre.

Un régulateur de débit (par ex. sous forme d'un restricteur) peut être associé à au moins l'une des électrovannes, et de préférence à chaque électrovanne.

En outre, chaque poste **29** de formage est muni d'un dispositif **37** de mesure de la pression régnant dans le récipient en cours de formage. Dans l'exemple illustré, le dispositif de mesure comprend un capteur de pression monté au niveau de la tuyère **35,** dans laquelle la pression en cours de formage est identique à la pression régnant dans le récipient **2.**

Selon un mode de réalisation correspondant à un procédé de formage par étirage soufflage, chaque poste **29** de formage comprend en outre une tige **38** d'étirage mobile, solidaire d'un chariot **39** monté en translation par rapport à un support **40.**

Le mouvement de la tige **38** peut être commandé de manière électromagnétique ; à cet effet, le support **40** comprend un stator linéaire commandé par un générateur **41** de courant, le chariot **39** étant lui-même muni d'un rotor mu par le champ électromagnétique variable produit par le stator.

L'unité **8** de formage est également équipée d'un système **42** de contrôle de la qualité des récipients **2** produits. Il s'agit par exemple d'un système optique comprenant une ou plusieurs caméras pointant vers le corps **31** et/ou le fond **32** des récipients **2** en sortie des moules **30.** Une caméra **43** peut être du type thermique, susceptible de fournir un profil thermique du récipient **2** visé (en particulier du corps **31**). Une autre caméra **44** peut être une caméra fonctionnant dans le domaine visible, apte à détecter sur le fond **32** du récipient **2** une pastille d'injection pour en déterminer la position (idéalement au centre géométrique du fond **32**). Le système **42** de contrôle peut également comprendre un interféromètre **45** permettant d'évaluer l'épaisseur de paroi du récipient **2.**

A la sortie du four **7,** les préformes chaudes (référencées **3'**) sont transférées vers l'unité **8** de formage via une unité (telle qu'une roue) de transfert pour être soufflées (ou étirées soufflées) chacune dans un moule **30.**

Dans l'unité **8** de formage, les préformes **3'** chaudes subissent une transformation de nature essentiellement mécanique, et on obtient à la sortie de l'unité **8** de formage des corps creux sous forme de récipients **2.**

A l'issue du formage, les récipients **2** sont évacués des moules **30** en vue d'être remplis, bouchés et étiquetés immédiatement, ou stockés temporairement en vue d'être remplis, bouchés et étiquetés ultérieurement. Une fois remplis, bouchés et étiquetés, les récipients sont groupés et conditionnés, par exemple au sein d'une unité de fardelage qui enveloppe chaque groupe de récipients au moyen d'un film thermorétractable.

L'unité **8** de formage est pilotée de manière automatique par une unité **46** de contrôle dédiée, asservie à l'unité **9** centrale.

L'unité **46** de contrôle de l'unité **8** de formage pilote une pluralité de contrôleurs **47** esclaves associés chacun à un (ou plusieurs) poste(s) **29** de formage. Chaque contrôleur **47** est du type contrôleur logique programmable, tel que décrit dans W. Bolton, Programmable Logic Controllers, Newnes, cinquième édition, 2009.

Chaque contrôleur **47** est programmé pour piloter le dispositif **37** de mesure de la pression régnant dans le moule, le bloc **36** d'actionneurs et le générateur **41** de courant alimentant le stator du (des) poste(s) **29** de formage auquel (auxquels) il est dédié.

La mesure de pression est réalisée en continu ou de manière séquentielle et régulière, à intervalles prédéterminés (par ex. de l'ordre de 5 ms). A partir de la mesure ainsi réalisée, le contrôleur **47** établit pendant le cycle de soufflage une courbe de pression associée au (à chaque) poste **29** de formage auquel il est dédié, décrivant l'évolution de la pression de fluide dans le récipient **2** en cours de formage à chaque instant, cette courbe étant mémorisée en cours de cycle.

Le contrôleur **47** est de préférence programmé pour communiquer pour analyser la courbe en fin de cycle, en extraire les coordonnées d'au moins un point singulier (notamment un pic local de pression, typiquement un point B tel que défini dans la demande internationale WO 2008/081108) et communiquer ces coordonnées à l'unité **46** de contrôle.

L'unité **46** de contrôle est quant à elle de préférence programmée pour prendre en compte chaque point singulier ainsi communiqué par chaque contrôleur **47,** calculer le cas échéant un point caractéristique à partir du (ou des) point(s) singulier(s) (il peut s'agir du point singulier lui-même ou d'une moyenne de points singuliers communiqués au cours de plusieurs cycles successifs par un même contrôleur ou une moyenne de points singuliers communiqués au cours d'un cycle unique par plusieurs contrôleurs **47,** ou encore une moyenne de points singuliers communiqués au cours de plusieurs cycles successifs par plusieurs contrôleurs **47**) et le comparer à un point de référence prédéterminé.

L'unité **46** de contrôle est en outre reliée directement au système **42** de contrôle de la qualité des récipients **2** en sortie de moule.

Avant le lancement de la production de série de récipients **2** conformes à un modèle prédéterminé, à partir de préformes **3** également conformes à un modèle prédéterminé, à une cadence nominale de production (typiquement 50 000 récipients par heure), il est prévu une phase préalable de réglage automatisé de l'installation 1, à l'issue de laquelle la production peut être lancée, également de manière automatisée. Le réglage de l'installation 1 suppose que, pour une paire donnée {préforme ; récipient}, cette paire n'a encore fait l'objet d'aucune production de série.

L'adjectif « automatisé » signifie que l'installation **1** procède elle-même au réglage de ses propres paramètres de fonctionnement pour que, à partir d'un modèle prédéfini de préforme, et à partir d'un modèle prédéfini de récipient, les récipients **2** produits soient décrétés conformes au modèle de récipient. L'automatisme peut aller jusqu'à permettre à l'installation **1** d'identifier elle-même le modèle de préforme employé (par exemple via un système de pesée de la préforme, couplé à un système de vision) et le modèle de récipient (par exemple via un système de pesée, couplé à un système de vision, ou encore, plus simplement, via un lecteur propre à acquérir un identifiant tel qu'un code barre associé au moule **30**).

Néanmoins, comme nous le verrons ci-après, l'opérateur **13** peut avoir priorité sur l'installation **1** pour définir ou sélectionner lui-même les spécifications du modèle de préforme ainsi que les spécifications du modèle de récipient à produire à partir de ce modèle de préforme, comme suggéré sur la figure 1.

Le réglage de l'installation **1** peut être complet, c'est-à-dire qu'il est réalisé successivement pour le four **7** et pour l'unité **8** de formage, ou partiel, c'est-à-dire qu'il est réalisé pour le four **7** seul ou pour l'unité **8** de formage seule.

Le réglage du four **7** est réalisé à partir d'une recette de chauffe (que l'on peut qualifier de recette de production d'une préforme **3'** chaude en tant que corps creux), cette recette comprenant des consignes de chauffe, parmi lesquelles :
- une puissance moyenne à délivrer aux modules **14** de chauffe, c'est-à-dire une puissance à délivrer aux sources **16** via les variateurs **25** ;
- une puissance à délivrer au système de ventilation, et plus précisément au moteur **24** du ventilateur **23** ;
- le cas échéant, un temps d'exposition des préformes **3** aux sources **16,** ou une cadence de défilement des préformes **3** devant les sources **16,** qui peut s'exprimer en puissance à délivrer au moteur **20** d'entraînement de la roue **19.**

Ces consignes de chauffe permettent de régler la température de chauffe des préformes **3** et le profil de température au sein de celles-ci.

La base **11** de données peut initialement contenir une unique recette de chauffe par défaut, commune à l'ensemble des modèles de préformes et permettant d'initier la phase de réglage de l'unité **7** de chauffe pour permettre l'élaboration, par corrections successives, d'une recette finale associée à une paire de modèles de préforme et de récipient.

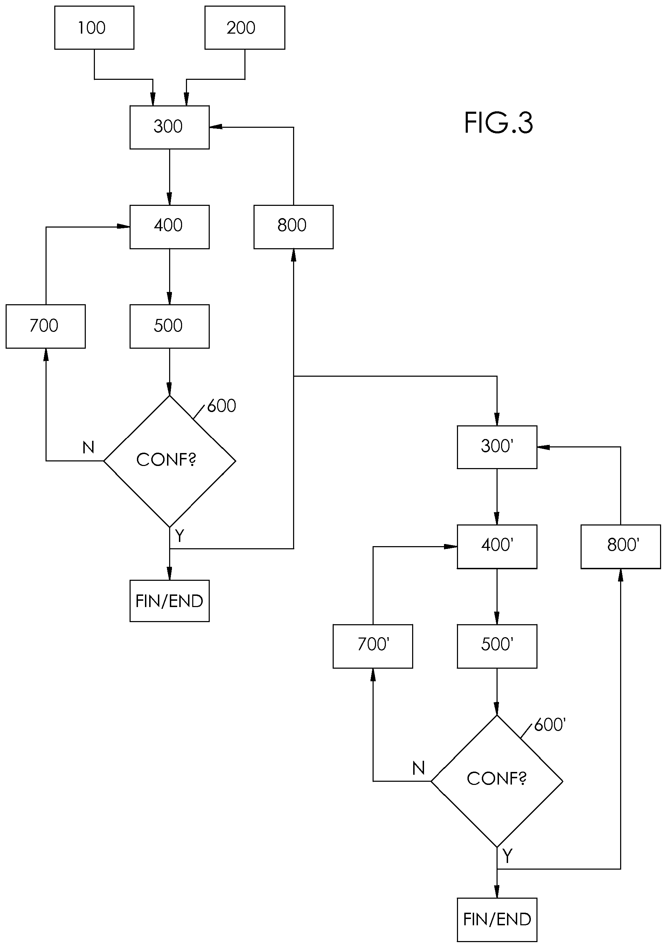

Le réglage du four **7** comprend une première étape **100** (figure 3) consistant à identifier un modèle de préforme sur la base duquel devront être produits les récipients **2.** Le modèle de préforme peut être identifié par tout ou partie des spécifications listées ci-dessus. Les spécifications d'un modèle de préforme peuvent être prédéfinies et stockées dans la base **11** de données de l'unité **9** centrale pour pouvoir être simplement sélectionnées par l'opérateur **13** ou par l'unité **9** centrale elle-même à partir d'une détection physique de la préforme, ou encore saisies au besoin par l'opérateur via la console **12,** par exemple dans un formulaire dédié affiché sur celle-ci. Sur la base de cette saisie, l'unité **9** centrale est en mesure d'identifier le modèle de préforme.

Une deuxième étape **200** consiste à identifier un modèle de récipient à produire à partir du modèle de préforme identifié à l'étape **100.** Le modèle de récipient peut être identifié par tout ou partie des spécifications listées ci-dessus. Les spécifications d'un modèle de récipient peuvent être prédéfinies et stockées dans la base **11** de données de l'unité **9** centrale pour pouvoir être simplement sélectionnées par l'opérateur **13** ou par l'unité **9** centrale elle-même à partir d'une identification réalisée sur un moule **30,** ou encore saisies au besoin par celui-ci via la console **12,** par exemple dans un formulaire dédié affiché sur celle-ci. Sur la base de cette saisie, l'unité **9** centrale est en mesure d'identifier le modèle de récipient.

Une troisième étape **300** consiste, à partir de l'identification du modèle de préforme (étape **100**) et du modèle de récipient à produire (étape **200**), à sélectionner dans la base **11** de données une recette de production par défaut associée à ces modèles. Comme nous l'avons déjà expliqué, il peut s'agir d'une recette unique, destinée à servir de base pour la définition d'une recette définitive associée à la paire {préforme ; récipient} identifiés aux étapes **100** et **200.**

Lorsque la recette ne comprend pas de cadence par défaut de défilement des préformes **3,** une étape supplémentaire consiste pour l'opérateur **13** à en définir une, soit en saisissant directement sa valeur lorsqu'il la connaît, soit en la sélectionnant parmi une liste de cadences possibles mémorisées dans l'unité **9** centrale.

Une quatrième étape **400** consiste à commander le fonctionnement du four **7** suivant la recette sélectionnée à l'étape **300,** et le cas échéant suivant la cadence sélectionnée.

A cet effet, l'unité **27** de contrôle du four **7** pilote, via les contrôleurs **28** esclaves ou directement, chaque variateur **25** de puissance, chaque moteur **24** de ventilation, ainsi que, pour la cadence, le moteur **20** de la roue **19.**

Une cinquième étape **500** consiste à mesurer, sur une ou plusieurs préformes **3'** chauffées à l'étape **400,** une (ou plusieurs) propriété(s) réelle(s), telle(s) que :
- la température moyenne de la préforme **3'** chauffée (ou de son corps **4** et/ou de son fond **6**),
- le profil thermique de la préforme **3'** chauffée (ou de son corps **4** et/ou de son fond **6**),

Cette (ces) mesure(s) est (sont) réalisée(s) par le dispositif **26** de thermographie et communiquée(s) à l'unité **27** de contrôle pour analyse directe par celle-ci, ou pour relais vers l'unité **9** centrale et analyse par celle-ci.

Une sixième étape **600** consiste à comparer cette (ces) propriété(s) réelle(s) avec une propriété théorique prédéterminée correspondante.

Ainsi, si la mesure réelle est la température moyenne (notée T_{M}) de la préforme **3'** chauffée, cette température moyenne est comparée à la température de transition vitreuse (notée T_{g}) de la matière, pour vérifier si le récipient **2** peut correctement être mise en forme.

Tant que la température T_{M} moyenne est inférieure à la température T_{g} de transition vitreuse, alors la température T_{M} moyenne est décrétée non conforme, et la recette est ajustée (étape **700**) par modification de la consigne de chauffe (en pratique en accroissant la puissance moyenne délivrée aux sources **16** via les variateurs **25** et/ou ou en diminuant la puissance délivrée au ventilateur **23** via le moteur **24**), et les étapes **400** à **600** sont répétées suivant la recette ajustée.

Si la mesure réelle est le profil thermique, celui-ci est comparé à un profil thermique théorique mémorisé dans l'unité **9** centrale.

Tant que le profil thermique mesuré est différent (avec une marge d'erreur autorisée, par ex. de 5% environ) du profil thermique théorique, alors le profil thermique mesuré est décrété non conforme, et la recette est ajustée (étape **700**) par modification de la consigne de chauffe (en pratique en modifiant la puissance délivrée aux sources **16** via les variateurs **25** et/ou en modifiant la puissance délivrée au ventilateur **23** via le moteur **24**), et les étapes **400** à **600** sont répétées suivant la recette ajustée.

Dès lors, en revanche, que la température T_{M} moyenne mesurée apparaît supérieure à la température T_{g} de transition vitreuse et/ou dès lors que le profil thermique mesuré est identique (à la marge d'erreur près) au profil thermique théorique, alors la propriété concernée (température moyenne ; profil thermique) est décrétée conforme, et la dernière recette suivie est mémorisée (étape **800**) dans la base 11 de données.

Sur la figure 3, les abréviations CONF., Y et N correspondent respectivement aux termes « conforme », « OUI » et « NON ».

La recette est décrétée finale, c'est-à-dire qu'elle est destinée à servir en production de série sans ajustement supplémentaire pour la paire {préforme ; récipient} correspondant aux modèles identifiés aux étapes **100** et **200.** Ainsi s'achève la phase de réglage du four **7.**

Le formage est réalisé suivant une recette de formage (que l'on peut qualifier de recette de production d'un récipient **2** en tant que corps creux final), cette recette comprenant des consignes de formage parmi lesquelles :
- la vitesse d'étirage, c'est-à-dire la vitesse de déplacement de la tige **38** d'étirage ;
- la pression de présoufflage ;
- l'instant d'ouverture de l'électrovanne de présoufflage ;
- l'instant de fermeture de l'électrovanne de présoufflage ;
- le débit de fluide transitant par l'électrovanne de présoufflage ;
- la pression de soufflage ;
- l'instant d'ouverture de l'électrovanne de soufflage ;
- l'instant de fermeture de l'électrovanne de soufflage ;
- le débit de fluide transitant par l'électrovanne de soufflage ;
- la pression de balayage ;
- l'instant d'ouverture de l'électrovanne de balayage ;
- l'instant de fermeture de l'électrovanne de balayage ;
- l'instant d'ouverture de l'électrovanne de récupération ;
- l'instant de fermeture de l'électrovanne de récupération ;
- l'instant d'ouverture de l'électrovanne de mise à l'air libre ;
- l'instant de fermeture de l'électrovanne de mise à l'air libre ;
- la vitesse de rotation du carrousel **33,** qui détermine la cadence de production des récipients **2** par l'unité **8** de formage.

Ces consignes de formage permettent de régler la répartition de la matière dans le récipient **2** (avec pour objectif une épaisseur relativement homogène), sa prise d'empreinte (avec pour objectif le respect du détail des reliefs du moule **30**), son aspect général (avec pour objectif d'éviter l'apparition de granulosités ou de zones laiteuses, caractéristiques d'un surétirage de la matière).

La base **11** de données peut initialement contenir une unique recette de formage par défaut, commune à l'ensemble des modèles de récipients et permettant d'initier la phase de réglage de l'unité **8** de formage pour permettre l'élaboration, par corrections successives, d'une recette finale propre à une paire de modèles de préforme et de récipient.

Si le réglage de l'unité **8** de formage est effectué dans la foulée de celui du four **7,** alors les modèles de préforme et de récipient peuvent être réutilisés tels quels, à moins qu'ils doivent être complétés par des spécifications supplémentaires utiles pour la phase de réglage de l'unité **8** de formage. Le profil thermique moyen constaté sur les préformes **3'** chauffées, issues d'une chauffe conduite avec la recette de chauffe finale peut ainsi être intégré aux spécifications du modèle de préforme en vue du formage.

Sinon, le réglage de l'unité **8** de formage comprend une première étape **100** consistant à identifier un modèle de préforme sur la base duquel devront être produits les récipients **2.** Comme indiqué précédemment, le modèle de préforme peut être identifié par tout ou partie des spécifications listées ci-dessus. Les spécifications d'un modèle de préforme peuvent être prédéfinies et stockées dans la base **11** de données de l'unité **9** centrale pour pouvoir être simplement sélectionnées par l'opérateur **13** ou par l'unité **9** centrale elle-même à partir d'une identification réalisée sur une préforme **3,** ou encore saisies au besoin par l'opérateur **13** via la console **12,** par exemple dans un formulaire dédié affiché sur celle-ci.

Une deuxième étape **200** consiste à identifier un modèle de récipient à produire à partir du modèle de préforme identifié à l'étape **100.** Comme indiqué précédemment, le modèle de récipient peut être défini par tout ou partie des spécifications listées ci-dessus. Les spécifications d'un modèle de récipient peuvent être prédéfinies et stockées dans la base **11** de données de l'unité **9** centrale pour pouvoir être simplement sélectionnées par l'opérateur **13** ou par l'unité **9** centrale elle-même à partir d'une identification réalisée sur un moule **30,** ou encore saisies au besoin par l'utilisateur **13** via la console **12,** par exemple dans un formulaire dédié affiché sur celle-ci.

Une troisième étape **300'** consiste, à partir de l'identification du modèle de préforme (étape **100**) et du modèle de récipient à produire (étape **200**), à sélectionner dans la base **11** de données une recette de formage par défaut associée à ces modèles. Il peut s'agir d'une recette unique, destinée à servir de base pour la définition d'une recette définitive de formage associée à la paire {préforme ; récipient} identifiés aux étapes **100** et **200.**

Lorsque la phase de réglage de l'unité **8** de formage suit celle du four **7,** une étape supplémentaire peut consister pour l'opérateur ou pour l'unité **9** centrale elle-même à définir une vitesse de rotation du carrousel **33** correspondant à la cadence de défilement du four **7,** de sorte à maintenir un flux constant de préformes **3** tout au long de l'installation **1.**

Une quatrième étape **400'** consiste à commander le fonctionnement de l'unité **8** de formage suivant la recette sélectionnée à l'étape **300',** et le cas échéant suivant la vitesse sélectionnée.

A cet effet, l'unité **46** de contrôle de l'unité **8** de formage pilote, via les contrôleurs **47** esclaves ou directement, chaque générateur **41** de courant et chaque bloc **36** d'actionneurs ainsi que, pour la cadence, un moteur d'entraînement du carrousel **33.**

Une cinquième étape **500'** consiste à mesurer, sur un ou plusieurs récipient(s) **2** formés lors de l'étape **400',** une (ou plusieurs) propriété(s) réelle(s), telle(s) que :
- le profil thermique du (ou de chaque) récipient **2** (au moyen de la caméra **43** thermique) ;
- l'épaisseur de paroi (au moyen de l'interféromètre **45**) ;
- la courbe (ou une partie de celle-ci, telle qu'un pic local) de pression dans le récipient **2** en cours de formation ;
- la position de la pastille d'injection sur le fond **32** du récipient **2,** (au moyen de la caméra **44**).

Ces mesures sont respectivement réalisées par le système **42** de contrôle de la qualité des récipients **2** produits et par le dispositif **37** de mesure de la pression dans la tuyère **35,** et communiquées à l'unité **46** de contrôle pour analyse directe par celle-ci, ou pour relais vers l'unité **9** centrale et analyse par celle-ci.

Une sixième étape **600'** consiste à comparer cette (ces) propriété(s) réelle(s) avec une propriété théorique prédéterminée correspondante.

Ainsi, si la mesure réelle comprend le profil thermique du récipient **2,** ce profil est comparé à un profil thermique théorique mémorisé dans l'unité **9** centrale.

Si la mesure réelle comprend l'épaisseur de paroi du récipient **2,** celle-ci est comparée à une épaisseur théorique mémorisée dans l'unité **9** centrale.

Si la mesure réelle comprend la courbe (ou un pic) de pression, celle-ci (celui-ci) est comparé(e) à une courbe (un pic) théorique de pression mémorisé(e) dans l'unité **9** centrale.

Si la mesure réelle comprend la position de la pastille d'injection sur le fond **32** du récipient **2,** cette position est comparée avec une position théorique mémorisée dans l'unité **9** centrale.

Tant que l'une au moins de ces mesures est différente (avec une marge d'erreur autorisée, par ex. 5% environ), de la propriété théorique correspondante, alors cette mesure est décrétée non conforme, et la recette est ajustée (étape **700'**) par modification de la consigne de production (de chauffe et/ou de formage). En pratique, l'unité **9** centrale peut commander :
- une modification de la puissance délivrée aux sources **16** via les variateurs **15,**
- une modification de la puissance délivrée au ventilateur **23** via le moteur,
- une modification de la pression ou du débit de présoufflage ou de soufflage,
- une modification de l'instant d'ouverture d'une (ou de plusieurs) électrovanne(s), ou encore
- une modification de la vitesse d'étirage.

Les mesures peuvent être cumulées et réalisées successivement, de même que les ajustements de la recette de production. Les étapes **400'** à **600'** sont répétées suivant la recette ajustée.

Dès lors, en revanche, que chaque propriété mesurée (réelle) correspond (en tenant compte, le cas échéant, de la marge d'erreur) à la propriété correspondante théorique, chaque propriété mesurée est décrétée conforme et la dernière recette suivie est mémorisée (étape **800'**) dans la base **11** de données.

Cette recette est décrétée finale, c'est-à-dire qu'elle est destinée à servir en production de série pour le formage (éventuellement à la suite de la chauffe) sans ajustement supplémentaire pour la paire {préforme ; récipient} correspondant aux modèles identifiés aux étapes **100** et **200.**

Ainsi s'achève la phase de réglage de l'unité **8** de formage. Lorsque la phase de réglage du four **7** a déjà été réalisée conformément à la description ci-dessus, alors avec la phase de réglage de l'unité **8** de formage s'achève également le réglage de l'installation 1, qui est alors prête à produire des récipients **2** conformes au modèle de récipient à partir de préformes **3** conformes au modèle de préforme.

Il résulte de ce qui précède une automatisation de la phase de réglage de l'installation **1,** ce qui permet :
- premièrement, de gagner un temps considérable par rapport aux réglages manuels, et donc d'augmenter le temps dévolu à la production,
- deuxièmement, de normaliser la phase de mise au point, la programmation pouvant en effet être déployée sur l'ensemble d'un parc de machines.

En pratique, un programme d'ordinateur est implémenté sur un support mémoire intégré à l'unité **9** centrale, ce programme comprenant des instructions correspondant aux étapes décrites ci-dessus, et mises en œuvre par le calculateur **10** de l'unité **9** centrale.

## Revendications

1. Procédé de réglage d'une installation (1) de production de récipients (2), l'installation comprenant une unité de chauffe des préformes et une unité de formage par soufflage ou étirage soufflage, chaque récipient (2) étant produit à partir d'une préforme (3) en matière plastique, ce procédé comprenant les étapes consistant à :
a) identifier un modèle de préforme ;
b) identifier un modèle de récipient à produire à partir du modèle de préforme ;
c) à partir de ces identifications, sélectionner dans une base (**11**) de données une recette de production associée au modèle de préforme et au modèle de récipient et comprenant des consignes de commande de l'installation (**1**) ;
d) commander le fonctionnement de l'installation (**1**) suivant la recette de production, pour produire un corps (**3**' ; **2**) creux à partir d'une préforme (**3**) conforme au modèle ;
ce procédé étant **caractérisé en ce qu'**il comprend les étapes consistant à :
e) mesurer une ou plusieurs propriétés réelles du corps (**3**' ; **2**) creux produit suivant la recette de production ;
f) comparer chaque propriété réelle avec une propriété théorique prédéterminée correspondante ;
g) tant qu'au moins une propriété réelle est décrétée non conforme :
h) ajuster la recette ;
i) répéter les étapes d) à f) suivant la recette ajustée ;
j) dès lors que chaque propriété réelle est décrétée conforme, mémoriser la recette de production ajustée dans la base (**11**) de données.

2. Procédé selon la revendication 1, **caractérisé en ce qu'**il comprend, avant la première étape de commande de fonctionnement de l'installation (**1**), une étape de définition d'une cadence de production.

3. Procédé selon la revendication 1 ou la revendication 2, **caractérisé en ce que** la identification d'un modèle de préforme comprend la sélection d'une ou plusieurs spécifications parmi :
- désignation de la matière,
- masse de la préforme,
- dimensions de la préforme,
- viscosité intrinsèque de la matière,
- teneur en eau,
- colorant,
- additif(s),
- absorbance de la matière,
- indice de réfraction de la matière.
et/ou **en ce que** la l'identificaition d'un modèle de récipient comprend la sélection d'une ou plusieurs spécifications parmi :
- format du récipient ;
- rapport d'allongement axial ;
- rapport d'allongement radial ;
- application à laquelle est destiné le récipient.

4. Procédé selon l'une des revendications précédentes, **caractérisé en ce que**, l'installation (**1**) comprenant un four (**7**), le corps creux est une préforme (**3'**) chauffée au sein du four (**7**), la recette de fabrication comprend des consignes de commande du four (**7**) et l'étape de commande de fonctionnement de l'installation (**1**) comprend une commande de fonctionnement du four (**7**).

5. Procédé selon la revendication 4, **caractérisé en ce que**, le four (**7**) comprenant des sources (**16**) de rayonnement électromagnétique, la recette de fabrication comprend une puissance moyenne à délivrer aux sources (**16**).

6. Procédé selon la revendication 5, **caractérisé en ce que** la recette de fabrication comprend un temps d'exposition des préformes (**3**) aux sources (**16**) ou une cadence de défilement des préformes (**3**) devant les sources (**16**).

7. Procédé selon l'une des revendications 4 à 6, **caractérisé en ce que**, le four (**7**) comprenant un système (**23**, **24**) de ventilation, la recette de fabrication comprend une puissance à délivrer au système (**23**, **24**) de ventilation.

8. Procédé selon l'une des revendications 4 à 7, **caractérisé en ce que**, l'installation (**1**) étant équipée d'un dispositif de thermographie, l'étape e) de mesure comprend la mesure d'un profil thermique sur la préforme (**3'**) à la sortie du four (**1**).

9. Procédé selon l'une des revendications précédentes, **caractérisé en ce que**, l'installation (**1**) comprenant au moins une unité (**8**) de formage équipée d'au moins un poste (**29**) de formage muni d'un moule (**30**) à l'empreinte du modèle de récipient à former, le corps creux (**2**) est un récipient, la recette de fabrication comprend des consignes de commande de l'unité (**8**) de formage et l'étape de commande de fonctionnement de l'installation (**1**) comprend une commande de fonctionnement de l'unité (**8**) de formage.

10. Procédé selon la revendication 9, **caractérisé en ce que**, l'unité (**8**) de formage comprenant des électrovannes pour l'injection de fluide sous pression dans le moule (**30**), ou pour l'extraction du fluide de celui-ci, la recette de fabrication comprend des consignes de formage parmi lesquelles l'instant d'ouverture des électrovannes, le débit de fluide transitant par celles-ci, et la pression de fluide.

11. Procédé selon la revendication 9 ou la revendication 10, **caractérisé en ce que**, le ou chaque poste (**29**) de formage étant équipé d'une tige (**38**) d'étirage mobile par rapport au moule (**30**), la recette de fabrication comprend la vitesse de déplacement de la tige (**38**).

12. Procédé selon l'une des revendications 9 à 11, **caractérisé en ce que**, l'unité (**8**) de formage comprenant un carrousel (**33**) sur lequel sont montés plusieurs postes (**29**) de formage, la recette de fabrication comprend la vitesse de rotation du carrousel (**33**).

13. Procédé selon l'une des revendications 9 à 12, **caractérisé en ce que**, l'installation (**1**) étant équipée d'une caméra (**43**) thermique, l'étape e) de mesure comprend la mesure du profil thermique du récipient (**2**) formé, à la sortie du moule (**30**).

14. Procédé selon l'une des revendications 9 à 13, **caractérisé en ce que**, l'installation (**1**) étant équipée d'un interféromètre (**45**), l'étape e) de mesure comprend la mesure de l'épaisseur de paroi du récipient (**2**) à la sortie du moule (**30**),
et/ou **en ce que**, l'installation (**1**) étant équipée d'un dispositif (**37**) de mesure de la pression, l'étape e) de mesure comprend la mesure de la pression régnant dans le récipient (**2**) en cours de formage,
et/ou **en ce que**, l'installation (**1**) étant équipée d'une caméra (**44**) fonctionnant dans le domaine visible, l'étape e) de mesure comprend la mesure de la position d'une pastille d'injection sur le fond du récipient (**2**) à la sortie du moule (**29**).

15. Produit programme d'ordinateur implémenté sur un support mémoire, susceptible d'être mis en œuvre par une unité (**10**) de traitement informatique et comprenant des instructions correspondant aux étapes d'un procédé selon l'une des revendications 1 à 6.

## Patentansprüche

1. Verfahren zur Einstellung einer Anlage (1) zur Herstellung von Behältern (2), wobei die Anlage eine Einheit zum Erwärmen der Vorformlinge und eine Einheit zum Formen durch Blasen oder Streckblasen enthält, wobei jeder Behälter (2) ausgehend von einem Vorformling (3) aus Kunststoff herstellt wird, wobei dieses Verfahren die Schritte enthält, die darin bestehen:
a) ein Vorformling-Modell zu bestimmen;
b) ein ausgehend von dem Vorformling-Modell herzustellendes Behälter-Modell zu bestimmen;
c) ausgehend von diesen Bestimmungen in einer Datenbank (11) eine Herstellungsrezeptur auszuwählen, die dem Vorformling-Modell und dem Behälter-Modell zugeordnet ist und Steuersollwerte der Anlage (1) enthält;
d) den Betrieb der Anlage (1) gemäß der Herstellungsrezeptur zu steuern, um ausgehend von einem dem Modell entsprechenden Vorformling (3) einen Hohlkörper (3'; 2) herzustellen;
wobei dieses Verfahren **dadurch gekennzeichnet ist, dass** es die Schritte enthält, die darin bestehen:
e) eine oder mehrere reale Eigenschaften des gemäß der Herstellungsrezeptur hergestellten Hohlkörpers (3', 2) zu messen;
f) jede reale Eigenschaft mit einer entsprechenden vorbestimmten theoretischen Eigenschaft zu vergleichen;
g) solange mindestens eine reale Eigenschaft als nicht konform erklärt wird:
h) die Rezeptur anzupassen;
i) die Schritte d) bis f) gemäß der angepassten Rezeptur zu wiederholen;
j) sobald jede reale Eigenschaft als konform erklärt wird, die angepasste Herstellungsrezeptur in der Datenbank (11) zu speichern.

2. Verfahren nach Anspruch 1, **dadurch gekennzeichnet, dass** es vor dem ersten Schritt des Steuerns des Betriebs der Anlage (1) einen Schritt der Definition einer Herstellungsgeschwindigkeit enthält.

3. Verfahren nach Anspruch 1 oder Anspruch 2, **dadurch gekennzeichnet, dass** die Bestimmung eines Vorformling-Modells die Auswahl einer oder mehrerer Spezifikationen enthält unter:
- Bezeichnung des Werkstoffs,
- Masse des Vorformlings,
- Abmessungen des Vorformlings,
- Eigenviskosität des Werkstoffs,
- Wassergehalt,
- Färbemittel,
- Zusatz(Zusätze),
- Extinktion des Werkstoffs,
- Brechungsindex des Werkstoffs,
und/oder dass die Bestimmung eines Behälter-Modells die Auswahl einer oder mehrerer Spezifikationen enthält unter:
- Format des Behälters;
- axiales Dehnungsverhältnis;
- radiales Dehnungsverhältnis;
- Anwendung, für die der Behälter bestimmt ist.

4. Verfahren nach einem der vorhergehenden Ansprüche, **dadurch gekennzeichnet, dass**, da die Anlage (1) einen Ofen (7) enthält, der Hohlkörper ein innerhalb des Ofens (7) erwärmter Vorformling (3') ist, die Fertigungsrezeptur Steuersollwerte des Ofens (7) enthält und der Schritt der Betriebssteuerung der Anlage (1) eine Betriebssteuerung des Ofens (7) enthält.

5. Verfahren nach Anspruch 4, **dadurch gekennzeichnet, dass**, da der Ofen (7) Quellen (16) elektromagnetischer Strahlung enthält, die Fertigungsrezeptur eine an die Quellen (16) zu liefernde mittlere Leistung enthält.

6. Verfahren nach Anspruch 5, **dadurch gekennzeichnet, dass** die Fertigungsrezeptur eine Zeit des den Quellen (16) Aussetzens der Vorformlinge (3) oder eine Vorbeilaufgeschwindigkeit der Vorformlinge (3) vor den Quellen (16) enthält.

7. Verfahren nach einem der Ansprüche 4 bis 6, **dadurch gekennzeichnet, dass**, da der Ofen (7) ein Belüftungssystem (23, 24) enthält, die Fertigungsrezeptur eine an das Belüftungssystem (23, 24) zu liefernde Leistung enthält.

8. Verfahren nach einem der Ansprüche 4 bis 7, **dadurch gekennzeichnet, dass**, da die Anlage (1) mit einer Thermographie-Vorrichtung ausgestattet ist, der Messschritt e) die Messung eines Wärmeprofils auf dem Vorformling (3') am Ausgang des Ofens (1) enthält.

9. Verfahren nach einem der vorhergehenden Ansprüche, **dadurch gekennzeichnet, dass**, da die Anlage (1) mindestens eine Formungseinheit (8) enthält, die mit mindestens einer Formstation (29) ausgestattet ist, die mit einer Form (30) mit dem Abdruck des zu formenden Behälter-Modells versehen ist, der Hohlkörper (2) ein Behälter ist, die Fertigungsrezeptur Steuersollwerte der Formungseinheit (8) enthält, und der Schritt der Betriebssteuerung der Anlage (1) eine Betriebssteuerung der Formungseinheit (8) enthält.

10. Verfahren nach Anspruch 9, **dadurch gekennzeichnet, dass**, da die Formungseinheit (8) Elektroventile zum Einspritzen von Druckfluid in die Form (30) oder zum Entfernen des Fluids aus dieser enthält, die Fertigungsrezeptur Formungssollwerte enthält, darunter der Öffnungsmoment der Elektroventile, der durch diese gehende Fluiddurchsatz und der Fluiddruck.

11. Verfahren nach Anspruch 9 oder Anspruch 10, **dadurch gekennzeichnet, dass**, da die oder jede Formstation (29) mit einer bezüglich der Form (30) beweglichen Streckstange (38) ausgestattet ist, die Fertigungsrezeptur die Verschiebungsgeschwindigkeit der Stange (38) enthält.

12. Verfahren nach einem der Ansprüche 9 bis 11, **dadurch gekennzeichnet, dass**, da die Formungseinheit (8) ein Karussell (33) enthält, auf das mehrere Formstationen (29) montiert sind, die Fertigungsrezeptur die Drehgeschwindigkeit des Karussells (33) enthält.

13. Verfahren nach einem der Ansprüche 9 bis 12, **dadurch gekennzeichnet, dass**, da die Anlage (1) mit einer Wärmekamera (43) ausgestattet ist, der Messschritt e) die Messung des Wärmeprofils des geformten Behälters (2) am Ausgang der Form (30) enthält.

14. Verfahren nach einem der Ansprüche 9 bis 13, **dadurch gekennzeichnet, dass**, da die Anlage (1) mit einem Interferometer (45) ausgestattet ist, der Messschritt e) die Messung der Wanddicke des Behälters (2) am Ausgang der Form (30) enthält,
und/oder dass, da die Anlage (1) mit einer Druckmessvorrichtung (37) ausgestattet ist, der Messschritt e) die Messung des im Behälter (2) während des Formens herrschenden Drucks enthält,
und/oder dass, da die Anlage (1) mit einer im sichtbaren Bereich arbeitenden Kamera (44) ausgestattet ist, der Messschritt e) die Messung der Position einer Einspritzscheibe auf dem Boden des Behälters (2) am Ausgang der Form (29) enthält.

15. Computerprogrammprodukt, das auf einem Speicherträger ausgeführt wird, das von einer EDV-Verarbeitungseinheit (10) durchgeführt werden kann und Anweisungen enthält, die den Schritten eines Verfahrens nach einem der Ansprüche 1 bis 6 entsprechen.

## Claims

1. Method for regulating an installation (1) for producing containers (2), the installation comprising a unit for heating preforms and a unit for forming by blow moulding or stretch blow moulding, each container (2) being produced from a preform (3) made of plastics material, this method comprising the steps of:
a) identifying a preform model;
b) identifying a container model to be produced from the preform model;
c) on the basis of these identifications, selecting from a database (11) a production recipe associated with the preform model and the container model and comprising control setpoints for the installation (1) ;
d) setting the installation (1) into operation as per the production recipe so as to produce a hollow body (3'; 2) from a preform (3) according to the model;
this method being **characterized in that** it comprises the steps of:
e) measuring one or more actual properties of the hollow body (3'; 2) produced using the production recipe;
f) comparing each actual property with a corresponding predetermined theoretical property;
g) if at least one actual property is deemed to be non-compliant:
h) adjusting the recipe;
i) repeating steps d) to f) following the adjusted recipe;
j) as soon as each actual property is deemed to be compliant, saving the adjusted production recipe in the database (11).

2. Method according to Claim 1, **characterized in that** it comprises, before the first step of setting the installation (1) into operation, a step of defining a production rate.

3. Method according to Claim 1 or Claim 2, **characterized in that** the identification of a preform model comprises the selection of one or more specifications from:
- designation of the material,
- weight of the preform,
- dimensions of the preform,
- intrinsic viscosity of the material,
- water content,
- colorant,
- additive(s),
- absorbency of the material,
- refractive index of the material,
and/or **in that** the identification of a container model comprises the selection of one or more specifications from:
- container format;
- axial stretch ratio;
- radial stretch ratio;
- application for which the container is intended.

4. Method according to one of the preceding claims, **characterized in that**, with the installation (1) comprising a furnace (7), the hollow body is a preform (3') heated within the furnace (7), the manufacturing recipe comprises control setpoints for the furnace (7) and the step of setting the installation (1) into operation comprises setting the furnace (7) into operation.

5. Method according to Claim 4, **characterized in that**, with the furnace (7) comprising sources (16) of electromagnetic radiation, the manufacturing recipe comprises a mean power to be supplied to the sources (16) .

6. Method according to Claim 5, **characterized in that** the manufacturing recipe comprises an exposure time for the preforms (3) to the sources (16) or a rate of travel of the preforms (3) in front of the sources (16).

7. Method according to one of Claims 4 to 6, **characterized in that**, with the furnace (7) comprising a ventilation system (23, 24), the manufacturing recipe comprises a power to be supplied to the ventilation system (23, 24).

8. Method according to one of Claims 4 to 7, **characterized in that**, with the installation (1) being equipped with a thermography device, measurement step e) comprises the measurement of a thermal profile over the preform (3') at the outlet of the furnace (1).

9. Method according to one of the preceding claims, **characterized in that**, with the installation (1) comprising at least one forming unit (8) equipped with at least one forming station (29) provided with a mould (30) with the impression of the container model to be formed, the hollow body (2) is a container, the manufacturing recipe comprises control setpoints for the forming unit (8) and the step of setting the installation (1) into operation comprises setting the forming unit (8) into operation.

10. Method according to Claim 9, **characterized in that**, with the forming unit (8) comprising solenoid valves for the injection of pressurized fluid into the mould (30), or for the extraction of the fluid therefrom, the manufacturing recipe comprises forming setpoints including the opening time of the solenoid valves, the flow rate of fluid passing through the latter, and the fluid pressure.

11. Method according to Claim 9 or Claim 10, **characterized in that**, with the or each forming station (29) being equipped with a stretch rod (38) that is movable with respect to the mould (30), the manufacturing recipe comprises the speed of movement of the rod (38).

12. Method according to one of Claims 9 to 11, **characterized in that**, with the forming unit (8) comprising a carousel (33) on which a plurality of forming stations (29) are mounted, the manufacturing recipe comprises the speed of rotation of the carousel (33) .

13. Method according to one of Claims 9 to 12, **characterized in that**, with the installation (1) being equipped with a thermal camera (43), the measurement step e) comprises the measurement of the thermal profile of the formed container (2) at the outlet of the mould (30).

14. Method according to one of Claims 9 to 13, **characterized in that**, with the installation (1) being equipped with an interferometer (45), the measurement step e) comprises the measurement of the wall thickness of the container (2) at the outlet of the mould (30),
and/or **in that**, with the installation (1) being equipped with a device (37) for measuring the pressure, the measurement step e) comprises the measurement of the pressure prevailing in the container (2) being formed,
and/or **in that**, with the installation (1) being equipped with a camera (44) that operates in the visible range, the measurement step e) comprises the measurement of the position of an injection pellet on the bottom of the container (2) at the outlet of the mould (29).

15. Computer program product stored on a memory device, able to be implemented by a data processing unit (10) and comprising instructions corresponding to the steps of a method according to one of Claims 1 to 6.
